# EUROPEAN PATENT APPLICATION

(11) **EP 4 796 422 A1**
(43) Date of publication of application: **26.08.2026**
(21) Application number: 26159040.0
(22) Date of filing: 17.02.2026
(51) Int. Cl.: B62J 43/28, B62J 43/13, B62K 19/02, B62K 19/16, B62K 19/40, B62M 6/90

(54) **BICYCLE WITH REINFORCING FOAM STRIPS**

(30) Priority: 19.02.2025 US 202563760296 P
(71) Applicant: Specialized Bicycle Components, Inc., Morgan Hill, CA 95037 (US)
(72) Inventor: Hafner, Timo Martin, Morgan Hill, 95037 (US); Giusto, Alessandro Daniel, Morgan Hill, 95037 (US)
(74) Representative: Forresters IP LLP

(57) **Abstract**

A frame member (54b) for an electric bicycle (10) includes a body (107) having a first side wall (108a) having a first thickness (T1) and a first lip (112a), and a second side wall (108b) spaced opposite the first side wall and having a second thickness (T2) and a second lip (112b) spaced from the first lip. The first lip and the second lip at least partially define an opening (100) therebetween sized and shaped to receive a battery (90) into the frame member. A plane (P1) is defined by the opening. The first side wall and the second side wall at least partially define a cavity (96) therebetween sized and shaped to store the battery in the frame member. The frame member also includes a first foam strip (114a) coupled to the first side wall and a second foam strip (114b) coupled to the second side wall. The first and second foam strips are embedded in carbon layers (117a, 117b), and are spaced from the plane.

## Description

### CROSS-REFERENCE TO RELATED APPLICATIONS

This application claims priority to U.S. Provisional Application No. 63/760,296, filed February 19, 2025.

### BACKGROUND

The present disclosure relates generally to bicycles, and more specifically to electric bicycles and frame members for electric bicycles.

Electric bicycles, typically referred to as "e-bikes," include electrical components, such as electric motors, power supplies, controllers, data displays, brake lever switches, etc. One or more of the electrical components may be electromechanically operated during use of the electric bicycle. For example, an electric motor may be operated to propel the electric bicycle. Alternatively, the electric motor may be operated to supplement mechanical and user applied input power from the crankshaft to propel the electric bicycle.

Electric bicycles also include a frame, and may have a tube that defines a cavity to receive a battery. In many examples, the cavity is sized and shaped such that the battery can be inserted and removed from the cavity, and replaced as needed throughout the lifetime of the electric bicycle.

### BRIEF DESCRIPTION OF DRAWINGS

FIG. 1 is a side view of a bicycle according to one embodiment.
FIG. 2 is a perspective view of the bicycle of FIG. 1, illustrating an opening into a cavity in a frame member for insertion of a battery.
FIG. 3 is a partial, perspective view of the bicycle of FIG. 1, with a cover attached over the cavity.
FIG. 4 is an enlarged view of the frame member of the bicycle of FIG. 1, with a foam strip extending along the frame member.
FIG. 5 is another enlarged view of the frame member of FIG. 4, with a frame member cutout showing a cross section of the frame member.
FIG. 6 is a front view of the frame member cutout of FIG. 5, illustrating a first foam strip and a second foam strip.
FIG. 7 is an enlarged cross-sectional view of either of the first foam strip or the second foam strip.
FIG. 8 is a partial, enlarged, schematic cross-sectional view of the frame member cutout, illustrating either of the first foam strip or the second foam strip coupled to a corresponding side wall.

### DETAILED DESCRIPTION

Before any examples are explained in detail, it is to be understood that the disclosure is not limited in its application to the details of construction and the arrangement of components set forth in the following description or illustrated in the following drawings. The disclosure is capable of other examples and of being practiced or of being carried out in various ways.

In accordance with one example, a frame member for an electric bicycle includes a body having a first side wall having a first thickness and a first lip, and a second side wall spaced opposite the first side wall and having a second thickness and a second lip spaced from the first lip. The first lip and the second lip at least partially define an opening therebetween sized and shaped to receive a battery into the frame member. A plane is defined by the opening. The first side wall and the second side wall at least partially define a cavity therebetween sized and shaped to store the battery in the frame member. The frame member also includes a first foam strip coupled to the first side wall and spaced from the plane by a first distance. The first foam strip is embedded in a first carbon layer. The frame member also includes a second foam strip coupled to the second side wall and spaced from the plane by a second distance. The second foam strip is embedded in a second carbon layer. The first foam strip is spaced opposite the second foam strip.

In accordance with another example, a bicycle may include a front wheel, a rear wheel, and a frame coupled to and supported by the front wheel and the rear wheel. The frame may have a frame member defining an opening sized and shaped to receive a battery into the frame member. The bicycle may further include a first foam strip coupled to the frame member and spaced from the opening by a first distance. The first foam strip may be embedded in a first carbon layer. The bicycle may include a second foam strip coupled to the frame member and spaced from the opening by a second distance. The second foam strip may be embedded in a second carbon layer. The first foam strip may be spaced opposite the second foam strip.

In accordance with another example, a bicycle may include a front wheel, a rear wheel, and a frame coupled to and supported by the front wheel and the rear wheel. The frame may have a frame member defining an opening. The bicycle may further include a first foam strip coupled to the frame member and spaced from the opening. The first foam strip may be embedded in a first carbon layer. The bicycle may further include a second foam strip coupled to the frame member and spaced from the opening. The second foam strip may be embedded in a second carbon layer. The first foam strip may have a first strip length that is at least 50 percent of an opening length of the opening. The second foam strip may have a second strip length that is at least 50 percent of the opening length.

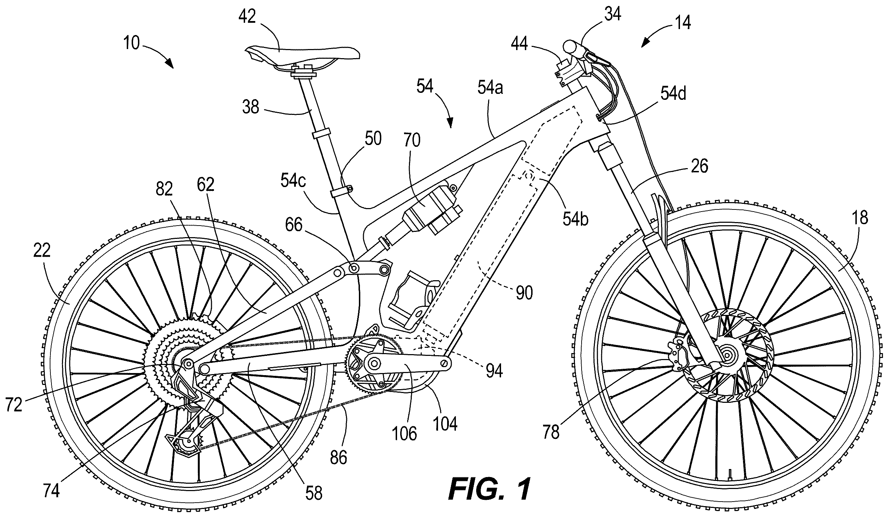

FIGS. 1-3 illustrate a bicycle 10. While the illustrated bicycle 10 is a mountain bicycle, the bicycle 10 may be any type of bicycle, including a road bicycle, a gravel bicycle, or any other type of bicycle. Additionally, while the illustrated bicycle 10 is an electric bicycle ("ebike") powered partially or entirely by an electric motor, in other examples the bicycle 10 may be a non-electric bicycle (i.e., powered only by manual movement of pedals).

As illustrated in FIGS. 1-3, the bicycle 10 may include a frame 14, a front wheel 18, and a rear wheel 22. The frame 14 may be coupled to and supported on the front wheel 18 and the rear wheel 22.

With continued reference to FIGS. 1-3, the bicycle 10 may include a front fork 26 (e.g., coupled to and supported by the front wheel 18), a handlebar 34, a seat post 38, and/or a saddle 42. The handlebar 34 may be coupled to the front fork 26 by a stem 44. The handlebar 34 may be configured to be grasped by a user. The front wheel 18 and/or the handlebar 34 may be used to steer the bicycle 10 when riding the bicycle 10.

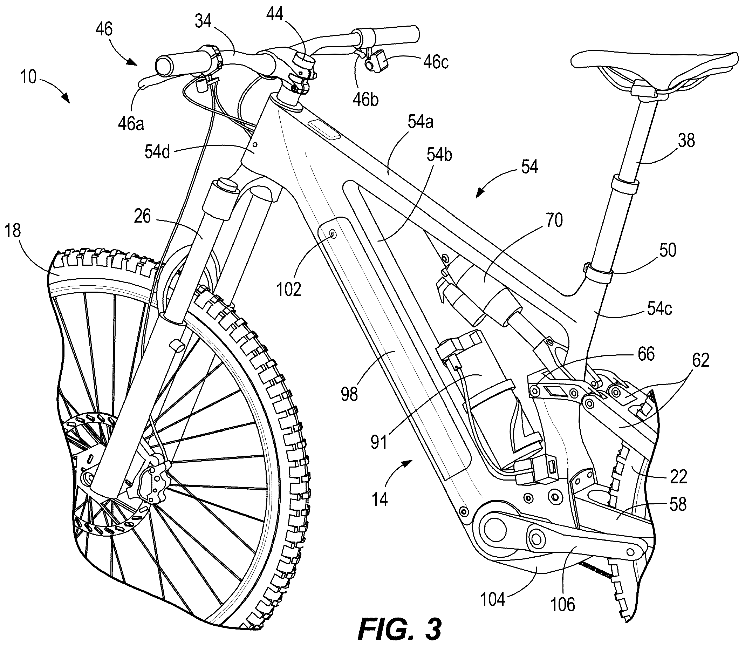

In some embodiments, the bicycle 10 may include control devices 46 (FIG. 3) configured to be operated by the user when riding the bicycle 10. The control devices 46 may include, for example, a front brake lever 46a, a rear brake lever 46b, a shifter 46c, and/or other user operated devices (e.g., a dropper post remote control, an electric bicycle remote control, etc.). For example, the control devices 46 may control the bicycle 10, provide operating parameters of the bicycle 10, and/or display information to a user of bicycle 10. Other embodiments of the bicycle 10 may include other numbers, types, and arrangements of control devices than that illustrated, including control devices that are not located on the handlebar 34.

With continued reference to FIGS. 1-3, the bicycle 10 may include a seat post clamp 50. The seat post 38 may be movably coupled to the frame 14 such that a height of the saddle 42 relative to the frame 14 may be adjustable by the user when using the seat post clamp 50. The saddle 42 may be coupled to the seat post 38, and may be configured to support the user riding the bicycle 10.

The frame 14 of the bicycle 10 may include multiple frame members 54. For example, the multiple tube members 54 may include a top tube member 54a, a down tube member 54b, a seat tube member 54c, and/or a head tube member 54d.

In many examples, the top tube member 54a may be coupled to and disposed between the seat tube member 54c and the head tube member 54d. The down tube member 54b may be coupled to the top tube member 54a and/or the head tube member 54d such that the down tube member 54b extends away from and forms an oblique angle with the top tube member 54a. The head tube member 54d may be disposed between the front fork 26 and the handlebar 34. As such, the user may move the front wheel 18 when steering the bicycle 10 in a desired direction via the handlebar 34. Other embodiments of the bicycle 10 may include other numbers, arrangements, and orientations of frame tube members than that illustrated.

With continued reference to FIGS. 1-3, in some embodiments the frame 14 may include at least one chain stay member 58 and/or at least one seat stay member 62 that couple the rear wheel 22 to the frame 14. The chain stay member 58 may be coupled to (e.g., pivotally coupled to) one or both of the seat tube member 54c and the seat stay member 62. The seat stay member 62 may be coupled to (e.g., pivotally coupled to) one or both of the seat tube member 54c and the chain stay member 58.

In some embodiments, the seat stay member 62 may be coupled to the rear wheel 22 and pivotably coupled to the seat tube member 54c by a linkage 66. The linkage 66 may also be coupled to a rear shock mechanism 70 that is pivotably coupled to the top tube member 54a. As such, the seat stay member 62 may be interconnected to the rear shock mechanism 70 by the linkage 66 so that the rear shock mechanism 70 absorbs impact experienced by the rear wheel 22 during operation of the bicycle 10.

In other embodiments, the bicycle 10 may include other numbers and arrangements of chain stay members, seat stay members, linkages, and shock mechanisms than that illustrated. In some examples, the bicycle 10 may not include any linkages (e.g., for pivotable coupling of frame components), and/or may not include any shock mechanisms.

With reference to FIG. 1, in some embodiments the bicycle 10 may include a derailleur hanger 72, a rear derailleur 74, a front brake caliper 78, and/or a rear brake caliper 82. The derailleur hanger 72 may be coupled to the seat stay member 62. The rear derailleur 74 may be coupled to the derailleur hanger 72, and thereby interconnected to the frame 14 via the derailleur hanger 72. The rear derailleur 74 may be configured to change a gear at which the bicycle 10 operates at a location proximate the rear wheel 22. The user may operate the shifter 46c (FIG. 3) during operation of the bicycle 10 to perform a gear changing operation. As such, the shifter 46c may actuate the rear derailleur 74 to thereby adjust a chain 86 and change the gear. In other embodiments, the bicycle 10 may include other numbers and arrangements of derailleur hangers, derailleurs, and chains than that illustrated, or may not include a derailleur hanger or derailleur.

With continued reference to FIGS. 1-3, in some embodiments one or more of the frame members 54 of the frame (e.g., top tube member 54a, the down tube member 54b, the seat tube member 54c, and/or the head tube member 54d) may be formed as a hollow frame member. The hollow frame members of the frame 14 may be provided to retain one or more cables (not shown) such as brake cables, shifting cables, electrical cables, etc. within the bicycle 10. In many examples, at least one of the one or more cables may be coupled to at least one of the control devices 46.

In the illustrated embodiments of FIGS. 1-3, the bicycle 10 may include a battery 90 and a motor 94 (FIG. 1). As further described below, the motor 94 may partially or entirely motively power the bicycle 10, and may receive electricity from the battery 90. For example, the battery 90 may be a rechargeable lithium-ion battery pack. One or more of the frame members 54 of the frame 14 (e.g., the down tube member 54b) may also, or alternatively, be formed as a hollow frame member, such as, for example, for retaining the battery 90. In some embodiments, the frame 14 may also house at least a portion of the motor 94 (FIG. 1) within the frame 14 (e.g., below the battery 90 at a bottom bracket or other portion of the bicycle 10).

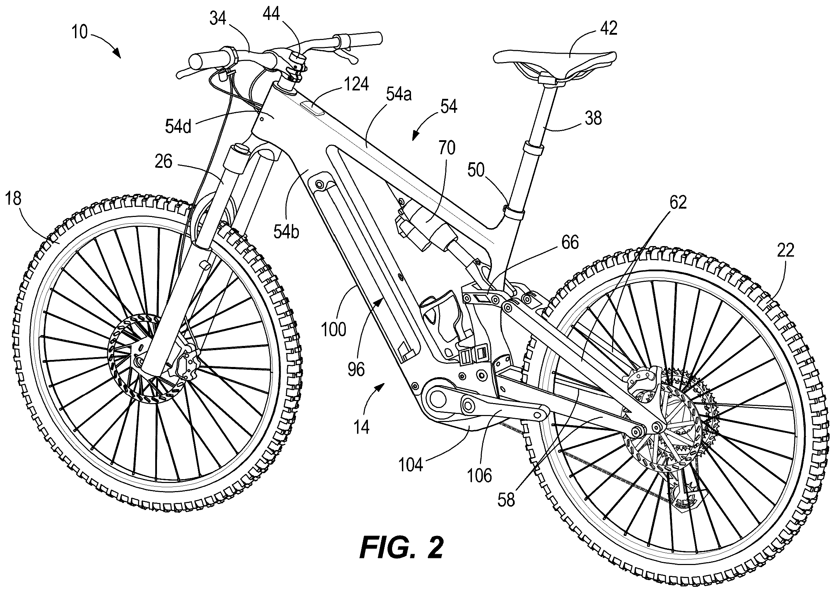

In the illustrated embodiment of FIGS. 1-3, the down tube member 54b defines a battery compartment or cavity 96 (FIG. 2) sized and shaped to receive and store the battery 90 within the frame 14. In some embodiments, the bicycle 10 may include a cover 98 (FIG. 3) that is removably coupled to the down tube member 54b. The cover 98 may enclose the cavity 96 and secure the battery 90 within the cavity 96 of the down tube member 54b.

In some embodiments, the cover 98 may be coupled to the down tube member 54b and/or the battery 90 by a fastening member 102 (FIG. 3; e.g., screw or other fastening mechanism). In many examples, the cavity 96 (FIG. 2) is configured so that the battery 90 may be removed from the cavity 96, such as, for example, by removing the cover 98. In further examples, and as further discussed herein, the battery 90 may be selectively replaced with one or more other batteries. In these or other embodiments, one or more other of the frame members 54 of the frame 14 may define a cavity similar to cavity 96.

In the illustrated embodiment of FIGS. 1-3, an opening 100 (FIG. 2) to the cavity 96 is located along a side of the down tube member 54b. The opening 100 is sized and shaped such that the battery 90 may be inserted laterally into the cavity 96. In other examples, the frame 14 may include an opening for example along a lower end of the down tube member 54b, or along a top end of the down tube member 54b, such that the battery 90 is inserted longitudinally into the cavity 96. In further examples, an opening may be along a top surface or a bottom surface of the down tube member 54b, such that the battery 90 is inserted vertically into the cavity 96.

As described above, the motor 94 may be arranged, for example, within a bottom portion of the down tube member 54b, such that the battery 90 is located above the motor 94. The bicycle 10 may also include a guard 104 (FIG. 1) coupled to the down tube member 54b and/or a bottom bracket of the bicycle 10. The guard 104 may be, or include, a motor housing to protect the motor 94.

The motor 94 may be electrically connected to the battery 90 and may be configured to receive electricity from the battery 90. In these examples, the motor 94 may be an electric motor. The motor 94 may partially or entirely motively power the bicycle 10. In some examples, the motor 94 may provide assistance to the user and may be coupled, for example, to a set of crank arms 106 (FIG. 1).

In some embodiments, when the user stops pedaling, the motor 94 may deactivate and stop providing assistance to the user. In some embodiments, the bicycle 10 may be operated in a mode that allows the bicycle 10 to be operated without assistance from the motor 94 or in a mode in which the motor may continue to be operable to power the bicycle even when the user is not pedaling.

In the illustrated embodiment of FIGS. 1-3, the bicycle 10 also may include a battery 91 (FIG. 3). The battery 91 is similar to battery 90, but is externally mounted on (rather than internally mounted in) one of the frame members 54 of the frame 14 (e.g., the down tube member 54b). In many examples, the battery 91 may be removably mounted to the one of the frame members 54 of the frame 14. FIGS. 1 and 2 show the bicycle 10 when the battery 91 is removed from the bicycle 10, and FIG. 3 shows the bicycle 10 when the battery 91 is mounted on the bicycle 10.

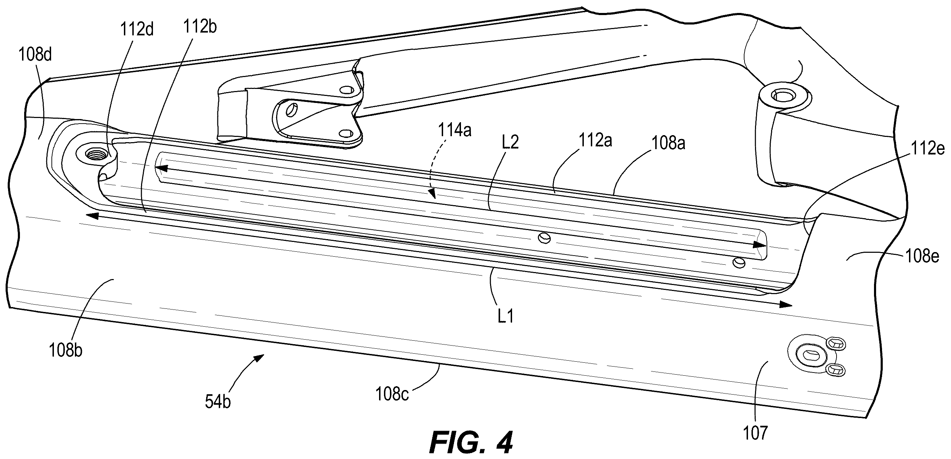

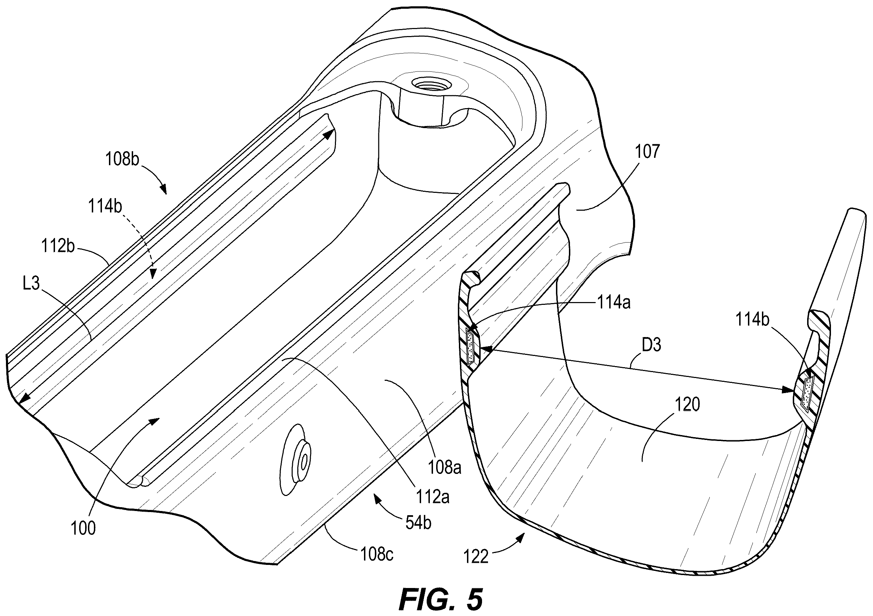

With reference to FIGS. 4 and 5, the down tube member 54b (or any other hollow frame member of the bicycle 10) may include, for example, a body 107 having a first side wall 108a, a second side wall 108b, and a third side wall 108c interconnecting the first and second side walls 108a, 108b. In some examples, each side wall 108a-108c may refer to a region or a portion of a respective side wall. The side walls 108a-c may be integrally formed together to at least partially form the down tube member 54b. Other embodiments of the bicycle 10 may include other numbers, types, and arrangements of side walls than that illustrated.

The first side wall 108a may be located along the down tube member 54b to serve, for example, as a top surface of the body 107 of the down tube member 54b that may face towards the top tube member 54a. The second side wall 108b may be spaced from and opposite the first side wall 108a to serve, for example, as a bottom surface of the body 107 of the down tube member 54b that may face towards the front wheel 18. The third side wall 108c may extend between the first side wall 108a and the second side wall 108b. In some examples, the third side wall 108c is disposed opposite the opening 100.

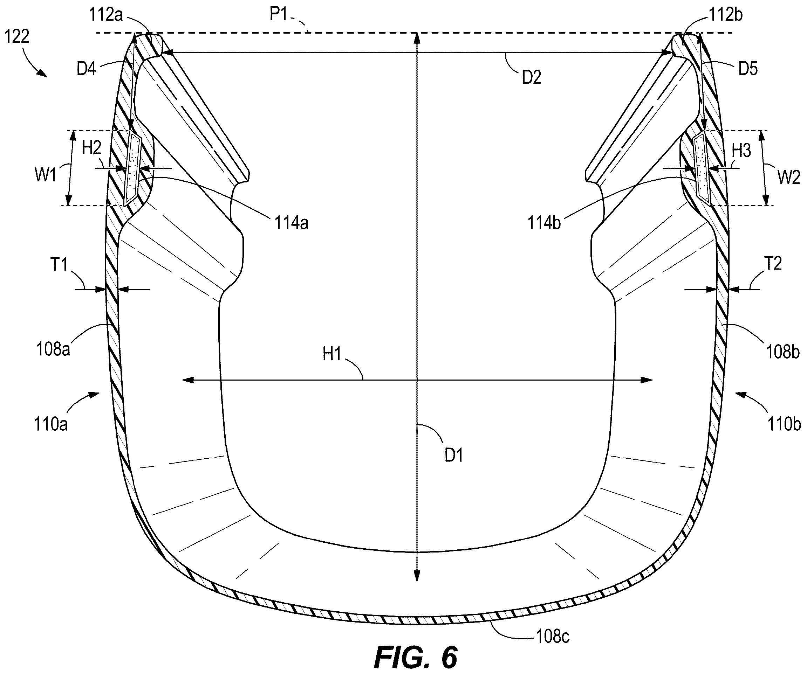

In some examples, the first side wall 108a (or a portion thereof) extends parallel to the second side wall 108b (or to a portion thereof). In some examples, at least a portion of the third side wall 108c extends perpendicular to each of the first side wall 108a and the second side wall 108b. A cavity depth D1 (FIG. 6) may be measured between the third side wall 108c and a plane P1 defined by the opening 100. The cavity depth D1 may represent a maximum distance between the third side wall 108c and the plane P1, taken along a direction perpendicular to the plane P1, and may further represent a maximum overall depth of the frame member. The plane P1, in some examples, may be defined along an exterior of the opening 100 such that the plane P1 is positioned along an end of the first side wall 108a and an end of the second side wall 108b.

In some examples, and as illustrated in FIG. 6, one or more portions of the first side wall 108a, the second side wall 108b, and/or the third side wall 108c may have a generally linear shape, and/or one or more portions of the first side wall 108a, the second side wall 108b, and/or the third side wall 108c may have a curvilinear (e.g., "C") shape. In some examples, and as seen in FIG. 6, the overall combination of the first side wall 108a, the second side wall 108b, and the third side wall 108c may have a generally "C" shape.

A down tube height H1 taken along a direction perpendicular to the cavity depth D1 may be measured between the first side wall 108a and the second side wall 108b. In the illustrated example, the down tube height H1 is a maximum distance between the first side wall 108a and the second side wall 108b, and is taken for example between a central portion 110a of the first side wall 108a and a central portion 110b of the second side wall 108b (the central portions 110a, 110b being located between the plane P1 and the third side wall 108c.

With continued reference to FIG. 6, the first side wall 108a may have a first lip 112a formed at the end of the first side wall 108a and the second side wall 108b may have a second lip 112b formed at the end of the second side wall 108b. The first lip 112a and the second lip 112b may be spaced from each other such that the first and second lips 112a, 112b are disposed opposite each other. A lip distance D2 may be measured between the first lip 112a of the first side wall 108a and the second lip 112b of the second side wall 108b (e.g., along or parallel to the plane P1, and along a direction that is perpendicular to the cavity depth D1). In the illustrated example, the lip distance D2 is a maximum distance between the first lip 112a and the second lip 112b. The first and second lips 112a, 112b may be located along the body 107 of the down tube member 54b to at least partially define the opening 100. The first side wall 108a, the second side wall 108b, and the third side wall 108c may further define at least a portion of the cavity 96.

With reference to FIG. 4, the body 107 of the down tube member 54b may include a fourth side wall 108d and a fifth side wall 108e. The fourth side wall 108d and the fifth side wall 108e may extend between the first and second side walls 108a, 108b and may be located at opposite ends of the down tube member 54b. In some examples, the fourth side wall 108d and the fifth side wall 108e may be spaced from and opposite the third side wall 108c, and may thereby further define the cavity 96. In other examples, the fourth side wall 108d and the fifth side wall 108e may each refer to a region or a portion of a respective wall. The fourth side wall 108d and the fifth side wall 108e may each have a lip 112d, 112e, respectively, at a corresponding end of the fourth and fifth side walls 108d, 108e to further define the opening 100.

With reference to FIG. 6, in some examples a minimum size of the opening 100 may be greater than at least 10 percent, or 20 percent, or 30 percent (or other values) of a height of the down tube member 54b as measured between the first side wall 108a and the second side wall 108b. For example, and as illustrated in FIG. 6, the opening 100 may have an opening height that is equivalent to the lip distance D2. In some examples, a minimum value of the opening height may be greater than at least 10 percent, or 20 percent, or 30 percent, etc., of the down tube height H1. In other examples, the opening height may be greater than at least 20 mm, or between 20mm and 150mm, or between 50mm and 100mm, or other values and ranges of values. The opening 100 may also have an opening length L1 (FIG. 4) extending between the lips 112d, 112e of the fourth and fifth side walls 108d, 108e such that the opening length L1 may at least be greater than at least 50mm, or between 50mm and 350mm, or between 100mm and 300mm, or between 150mm and 250mm, or other values and ranges of values. The size of the opening 100 may depend, for example, on whether the opening is being used to receive a battery, or is located for example on a different portion of the bicycle 10 and/or is being used to receive a different component or components.

With reference to FIGS. 4-6, the bicycle 10 may further include a first foam strip 114a and a second foam strip 114b. The first foam strip 114a may be coupled to the first side wall 108a, and/or the second foam strip 114b may be coupled to the second side wall 108b. In some examples, the first foam strip 114a and/or the second foam strip 114b is located at or adjacent the opening 100. In some examples, the first foam strip 114a and/or the second foam strip 114b is spaced from the opening 100. For example, the first foam strip 114a and the second foam strip 114b may be spaced from the plane P1 in a direction parallel to the cavity depth D1.

The second foam strip 114b may be spaced from and disposed opposite the first foam strip 114a such that a strip distance D3 (FIG. 5) may be measurable between the first side wall 108a (at the location of the first foam strip 114a) and the second side wall 108b (at the location of the second foam strip 114b). The distance D3 may extend parallel to the distance D2 and the height H1, and parallel to the plane P1. The strip distance D3 may be less than the lip distance D2. Each foam strip 114a, 114b may extend along a portion of the opening length L1.

In some examples, each foam strip 114a, 114b may extend a strip length L2, L3, respectively, that is at least 50 percent, at least 60 percent, at least 70 percent, or at least 80 percent, for example, of the opening length L1. Other examples may include other values and ranges of values.

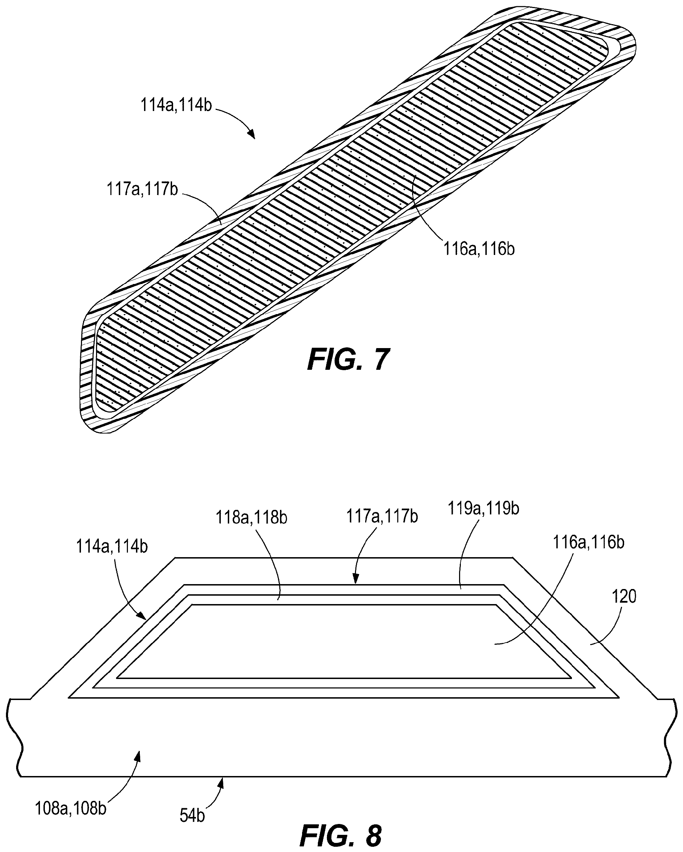

With reference to FIGS. 7 and 8, each foam strip 114a, 114b, for example, may include a foam layer (e.g., Polymethacrylimide (PMI) foam) 116a, 116b embedded (e.g., wrapped) in a carbon layer 117a, 117b. As such, the first foam strip 114a may be formed with a first PMI foam layer 116a embedded in a first carbon layer 117a and the second foam strip 114b may be formed with a second PMI foam layer 116b embedded in a second carbon layer 117b. Other examples may not include a carbon layer(s).

In some examples, each carbon layer 117a, 117b may have a primary layer 118a, 118b disposed on top of and/or at least partially surrounding a corresponding PMI foam layer 116a, 116b and a secondary layer 119a, 119b disposed on top of and/or at least partially surrounding a corresponding primary layer 118a, 118b. Other examples may include other numbers and arrangements of layers, including only a single layer or more than two layers.

Before being coupled to the down tube member 54b, in some examples, each foam strip 114a, 114b may be pre-assembled such that the PMI foam layers 116a, 116b are wrapped in a respective carbon layer 117a, 117b. Then the pre-assembled foam strips 114a, 114b may be placed along a corresponding side wall 108a, 108b and covered by a ply or plies 120 to be coupled to the down tube member 54b.

In other examples, the foam strips 114a, 114b may be cured before being coupled to the down tube member 54b. In additional examples, one or more of the foam strips 114a, 114b may be formed in other ways, and/or not include a carbon layer, and/or not be covered by plies 120.

Additionally, while two foam strips 114a, 114b are illustrated, in other examples the bicycle 10 may include only a single foam strip on each side wall 108a, 108b, or more than two foam strips, at or adjacent an opening (e.g., the opening 100) on each side wall 108a, 108b, or spaced from an opening. For embodiments with multiple foam strips (e.g., at or adjacent the opening 100, or spaced from the opening 100), the foam strips may be arranged in series, in parallel, or other arrangements.

In some examples, the foam strip or strips 114a, 114b may be purposely placed at or adjacent the opening 100 of the down tube member 54b to reinforce and strengthen an area of the body 107 proximate the opening 100. Providing the foam strip or strips 114a, 114b along the down tube member 54b may ultimately inhibit or reduce a bending or flexing action from occurring along the area of the body 107 proximate the opening 100. As such, the strength of the body 107 of the down tube member 54b may be close to strength conditions of a down tube member without an opening.

With reference to FIGS. 5 and 6, a cutout 122 of the down tube member 54b is illustrated. The down tube cutout 122 depicts a portion of the down tube member 54b and includes the first side wall 108a with the first foam strip 114a coupled thereto, the second side wall 108b with the second foam strip 114b coupled thereto, and the third side wall 108c extending therebetween. In some examples, each foam strip 114a, 114b may have a trapezoidal cross-sectional shape to provide a smooth transition between the down tube member 54b and the ply or plies 120 (FIG. 8) that cover the foam strips 114a, 114b.

In some examples, the trapezoidal cross-sectional shape of each foam strip 114a, 114b may inhibit or prevent air from developing and being trapped between the down tube member 54b and the plies 120 (e.g., at the corners of the foam strips 114a, 114b) when layering the plies 120 over the foam strips 114a, 114b. Other examples may include other cross-sectional shapes (e.g., rectangular, square, etc.)

In some examples, and as illustrated in FIG. 6, each foam strip 114a, 114b may have a strip width W1, W2, respectively, a strip height H2, H3, respectively, and the strip length L2, L3, respectively (FIGS. 4 and 5). The strip width W1, W2 of each foam strip 114a, 114b may be measured parallel to the cavity depth D1.

In some examples, the strip width W1, W2 of each foam strip 114a, 114b may be at least 6 mm, or at least 8 mm, or at least 10 mm, or at least 12 mm, or at least 14 mm, or other values and ranges of values. The strip height H2, H3 of each foam strip 114a, 114b may be at least 2 mm, or at least 3 mm, or at least 4 mm, or at least 5 mm, or other values and ranges of values. In some examples, the strip length L2, L3 of each foam strip 114a, 114b may be extend the entire length L1 of the opening 100. In some examples, the strip length L2, L3 of each foam strip 114a, 114b is 370 mm, or between 360 mm and 380 mm, or between 350 mm and 390 mm, or between 340 mm and 400 mm, or other values and ranges of values. The dimensions of each foam strip 114a, 114b may be based, for example, upon a finite element analysis of the frame 14. The strip width W1, W2 of each foam strip 114a, 114b may also be dependent upon the shape of the down tube member 54b and the battery 90.

As described above, the first foam strip 114a and/or the second foam strip 114b may be respectively located at or adjacent the opening 100, and in some examples may be spaced at least some distance from the opening 100. With reference to FIG. 6, in some examples the first foam strip 114a may be spaced a first distance D4 from the plane P1 (e.g., perpendicular to the plane P1) along the first side wall 108a and the second foam strip 114b may be spaced a second distance D5 from the plane P1 (e.g., perpendicular to the plane P1) along the second side wall 108b. The first distance D4 and the second distance D5 may respectively locate the first and second foam strips 114a, 114b close to the opening 100 to thereby increase the strength of the area proximate the opening 100.

Respectively providing a space between the opening 100 and the foam strips 114a, 114b may avoid formation of voids within the down tube member 54b during a molding process. In some examples, the first distance D4 may be at least 1.5 times a thickness T1 of the first side wall 108a, and the second distance D5 may be at least 1.5 times a thickness T2 of the second side wall 108b.

Other examples include other values and ranges of values of the relative distances and thicknesses, dependent for example on the dimensions of the down tube member 54b or other tube, and/or the opening 100. In the illustrated example, the thickness T1 of the first side wall 108a varies along the first side wall 108a, and the thickness T2 of the second side wall 108b varies along the second side wall 108b. Accordingly, in some examples the first distance D4 may be at least 1.5 times the thickness T1, where T1 is a minimum thickness of the first side wall 108a (e.g., at a location close to the third side wall 108c).

In other examples the first distance D4 may be at least 1.5 times the thickness T1, where T1 is a maximum thickness of the first side wall 108a (e.g., at a location between the first lip 112a and the first foam strip 114a). Similarly, in some examples the second distance D5 may be at least 1.5 times the thickness T2, where T2 is a minimum thickness of the second side wall 108b (e.g., at a location close to the third side wall 108c). In other examples the second distance D5 may be at least 1.5 times the thickness T2, where T2 is a maximum thickness of the second side wall 108b (e.g., at a location between the second lip 112b and the second foam strip 114b).

In some examples, the first distance D4 and the second distance D5 may be substantially equal. In further examples, the first distance D4 and the second distance D5 may be at least 5 percent, at least 10, at least 15 percent, at least 20 percent, or other values for example, of the cavity depth D1. The first distance D4 and the second distance D5 (and the relative percentages described above) may have other values and/or ranges of values dependent for example upon the various dimensions of the down tube member 54b or other tube, and/ or the opening 100.

In the illustrated embodiment of FIGS. 4 and 5, the frame 14 (e.g., the body 107 of the down tube member 54b) may be asymmetrically formed due to the opening 100 being located along the side of the body 107. As a result, different deflection values may be generated along a drive side and a non-drive side (e.g., opposite side of the drive side) of the bicycle 10. Deflection and/or bending may also occur along the head tube member 54d because of the asymmetrical formation of the frame 14. The structure of each foam strip 114a, 114b may ultimately depend on the illustrated location of the opening 100 to manage the various deflection values produced by the asymmetrical formation of the frame 14. As such, the dimensions of each foam strip 114a, 114b may be specifically selected to generate symmetrical results and/or other desired results during a finite element analysis of the frame 14.

In alternative embodiments, asymmetry of the frame 14 (e.g., the body 107 of the down tube member 54b) may not be a result of the opening 100 being located along the top surface or the bottom surface of the body 107 of the down tube member 54b. Instead, the frame 14 may be symmetrically formed in some examples. The size and shape of the opening 100 may still reduce the strength and stiffness of the down tube member 54b at the particular locations of the opening 100. As such, the first foam strip 114a and/or the second foam strip 114b may still be provided along the down tube member 54b when the opening 100 is located on the top surface or the bottom surface of the body 107 of the down tube member 54b, for example to reinforce the area proximate the opening 100.

In further embodiments, a foam strip (e.g., foam strips 114a, 114b) may additionally or alternatively be provided for other openings defined within the bicycle 10. The other openings may vary in size in comparison to the opening 100 for the cavity 96. For example, a foam strip may additionally or alternatively be provided along an area of the frame 14 that is proximate an opening for a human machine interface 124 (FIG. 2). In some examples, a foam strip may additionally or alternatively be provided along an area of the frame 14 that is proximate an opening for the motor 94.

In additional embodiments, the illustrated opening 100 may also, or alternatively, be used for a storage compartment defined within the cavity 96 (e.g., for storing items). In some examples, the opening 100 may be larger (or smaller) than an opening for a battery compartment. In some examples, a foam strip may be provided along an area of the frame 14 that is proximate an opening for a shock mechanism(s), such as an embedded shock mechanism(s) for a full suspension bicycle. The opening 100 overall may be sized shaped as needed for its particular purpose. As such, in the illustrated example a foam strip, similar to the illustrated foam strips 114a, 114b, may be provided along the frame 14 to reinforce any area proximate an opening defined within the bicycle 10. For smaller openings, a small foam strip that is at least 50 percent, or at least 60 percent, or at least 70 percent, of a length of a corresponding opening, may be utilized for example for reinforcement.

In yet other examples, only carbon layers (e.g., carbon layer 117a, 117b) may be provided along the area proximate a small opening of the bicycle 10, because the carbon layers are sufficient enough to provide reinforcement at a small opening without the use of a PMI foam. Additionally, in some examples, multiple foam strips (e.g., two strips, three strips, four strips, etc.) may be used at a single opening such as the opening 100. In some examples, multiple foam strips may be used on a same side of the opening, either in series or in parallel relative to one another. Some openings in the bicycle may include one or two or more foam strips, and other openings may not include any foam strips, or may include other numbers and arrangements of foam strips than other openings.

Additionally, in some examples, the specifications of the foam strips (e.g., size, materials, arrangement of layers, etc.) may be configured to make the strength of the tube as close as possible to the conditions that would exist if the opening had not been formed.

Some of the examples may be further described by reference to the following numbered clauses:
1. A frame member for an electric bicycle, the frame member comprising:
   a body having
      a first side wall having a first thickness and a first lip, and
      a second side wall spaced opposite the first side wall and having a second thickness and a second lip spaced from the first lip;
      wherein the first lip and the second lip at least partially define an opening therebetween sized and shaped to receive a battery into the frame member, wherein a plane is defined by the opening, and wherein the first side wall and the second side wall at least partially define a cavity therebetween sized and shaped to store the battery in the frame member;
   a first foam strip coupled to the first side wall and spaced from the plane by a first distance, wherein the first foam strip is embedded in a first carbon layer; and
   a second foam strip coupled to the second side wall and spaced from the plane by a second distance, wherein the second foam strip is embedded in a second carbon layer, and
   wherein the first foam strip is spaced opposite the second foam strip.
2. The frame member of clause 1, wherein the first distance is at least 1.5 times the first thickness.
3. The frame member of clause 1 or clause 2, wherein the second distance is at least 1.5 times the second thickness.
4. The frame member of any of the preceding clauses, wherein the first distance and the second distance are substantially equal.
5. The frame member of any of the preceding clauses, wherein the opening has an opening length, wherein the first foam strip has a first strip length that is at least 50 percent of the opening length, and wherein the second foam strip has a second strip length that is at least 50 percent of the opening length.
6. The frame member of any of the preceding clauses, wherein a third distance measured between the first foam strip and the second foam strip is less than a fourth distance measured between the first lip of the first side wall and the second lip of the second side wall.
7. The frame member of clause 6, wherein the body further includes a third side wall extending between the first side wall and the second side wall, and wherein a fifth distance is measured between the third side wall and a plane defined by the opening.
8. The frame member of clause 7, wherein the first foam strip has a strip width measured parallel to the fifth distance, and wherein the strip width is at least 6 mm.
9. The frame member of any of the preceding clauses, wherein the first foam strip has a trapezoidal cross-section.
10. The frame member of clause 1, wherein the first foam strip has a strip width of 14 mm, a strip height of 3 mm, and a strip length of 370 mm.
11. The frame member of any of the preceding clauses, wherein the opening is defined on a side of the body such that the body has an asymmetrical formation.
12. The frame member of any of the preceding clauses, wherein the opening is defined on a top surface of the body such that the body has a symmetrical formation.
13. A bicycle comprising:
   a front wheel;
   a rear wheel;
   a frame coupled to and supported by the front wheel and the rear wheel, the frame having a frame member defining an opening sized and shaped to receive a battery into the frame member;
   a first foam strip coupled to the frame member and spaced from the opening by a first distance, wherein the first foam strip is embedded in a first carbon layer; and
   a second foam strip coupled to the frame member and spaced from the opening by a second distance, wherein the second foam strip is embedded in a second carbon layer,
   wherein the first foam strip is spaced opposite the second foam strip.
14. The bicycle of clause 13, wherein the first distance and the second distance are at least 1.5 times a thickness defined by the frame member.
15. The bicycle of clause 13 or 14, wherein each foam strip has a trapezoidal cross-section.
16. The bicycle of any of clauses 13-15, wherein each first foam strip has a strip width of 14 mm, a strip height of 3 mm, and a strip length of 370 mm.
17. A bicycle comprising:
   a front wheel;
   a rear wheel;
   a frame coupled to and supported by the front wheel and the rear wheel, the frame having a frame member defining an opening;
   a first foam strip coupled to the frame member and spaced from the opening, wherein the first foam strip is embedded in a first carbon layer; and
   a second foam strip coupled to the frame member and spaced from the opening, wherein the second foam strip is embedded in a second carbon layer;
   wherein the first foam strip has a first strip length that is at least 50 percent of an opening length of the opening, and
   wherein the second foam strip has a second strip length that is at least 50 percent of the opening length.
18. The bicycle of clause 17, wherein each foam strip has a strip width that is at least 6 mm.
19. The bicycle of clause 17 or 18, wherein each foam strip has a strip height of 3 mm.
20. The bicycle of any of clauses 17-19, wherein the first foam strip has a trapezoidal cross-section.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and advantages of the disclosure are set forth in the following claims.

## Claims

1. A frame member for an electric bicycle, the frame member comprising:
a body having
a first side wall having a first thickness and a first lip, and
a second side wall spaced opposite the first side wall and having a second thickness and a second lip spaced from the first lip;
wherein the first lip and the second lip at least partially define an opening therebetween sized and shaped to receive a battery into the frame member, wherein a plane is defined by the opening, and wherein the first side wall and the second side wall at least partially define a cavity therebetween sized and shaped to store the battery in the frame member;
a first foam strip coupled to the first side wall and spaced from the plane by a first distance, wherein the first foam strip is embedded in a first carbon layer; and
a second foam strip coupled to the second side wall and spaced from the plane by a second distance, wherein the second foam strip is embedded in a second carbon layer, and
wherein the first foam strip is spaced opposite the second foam strip.

2. The frame member of claim 1, wherein the first distance is at least 1.5 times the first thickness.

3. The frame member of claim 1 or claim 2, wherein the second distance is at least 1.5 times the second thickness.

4. The frame member of any of the preceding claims, wherein the first distance and the second distance are substantially equal.

5. The frame member of any of the preceding claims, wherein the opening has an opening length, wherein the first foam strip has a first strip length that is at least 50 percent of the opening length, and wherein the second foam strip has a second strip length that is at least 50 percent of the opening length.

6. The frame member of any of the preceding claims, wherein a third distance measured between the first foam strip and the second foam strip is less than a fourth distance measured between the first lip of the first side wall and the second lip of the second side wall.

7. The frame member of claim 6, wherein the body further includes a third side wall extending between the first side wall and the second side wall, and wherein a fifth distance is measured between the third side wall and a plane defined by the opening.

8. The frame member of claim 7, wherein the first foam strip has a strip width measured parallel to the fifth distance, and wherein the strip width is at least 6 mm.

9. The frame member of any of the preceding claims, wherein the first foam strip has a trapezoidal cross-section.

10. The frame member of claim 1, wherein the first foam strip has a strip width of 14 mm, a strip height of 3 mm, and a strip length of 370 mm.

11. The frame member of any of the preceding claims, wherein the opening is defined on a side of the body such that the body has an asymmetrical formation.

12. The frame member of any of the preceding claims, wherein the opening is defined on a top surface of the body such that the body has a symmetrical formation.

13. A bicycle comprising:
a front wheel;
a rear wheel; and
the frame member of any of claims 1-12.

14. The bicycle of claim 13, wherein the first foam strip has a first strip length that is at least 50 percent of an opening length of the opening.

15. The bicycle of claim 14, wherein the second foam strip has a second strip length that is at least 50 percent of the opening length.
